# EUROPEAN PATENT APPLICATION

(11) **EP 2 159 148 A1**
(43) Date of publication of application: **03.03.2010**
(21) Application number: 08163109.5
(22) Date of filing: 27.08.2008
(51) Int. Cl.: B62K 19/18, B23P 11/02

(54) **Method for Assembling Parts of a Cycle Frame**

(71) Applicant: Lin, Chang Hui, Sisshui Hsiang, Chang Hua Hsien 50446 Province of China (TW)
(72) Inventor: Lin, Chang Hui, Sisshui Hsiang, Chang Hua Hsien 50446 Province of China (TW)
(74) Representative: Beck & Rössig European Patent Attorneys

(57) **Abstract**

A method is used for assembling a cycle frame which includes a number of male members each having one or more male fitting elements, and a number of female members each having one or more female fitting elements, the male members may be frozen in such as a liquid nitrogen to contract the male fitting element before the male fitting elements are engaged into the female fitting elements, or the female members may be heated in such as a high frequency furnace to expand the female fitting elements before the male fitting elements are engaged and assembled into the female fitting elements, for allowing the parts to be assembled together without latches, fasteners, adhesive materials or welding seams.

## Description

The invention relates to a method for assembling the parts of bicycle frames by heating or cooling some of the parts of the cycle frame, and then assembling the parts before the heated or the cooled parts are returned back to the room temperature.

Typical bicycle frames comprise a number of parts to be assembled and secured or welded or brazed together. However, the welding processes may pollute our environment, and the welding seams may greatly increase the weight of the typical bicycle frames.

The invention is to provide a method for assembling the parts of the cycle frames by heating or cooling some of the parts of the cycle frames, without latches, fasteners, or welding seams.

This object is achieved by a method according to claim 1. Advantageous embodiments are laid down in further claims.

In the drawings:
FIG. 1 is an exploded view of a cycle frame;
FIG. 2 is a perspective view of the assembled cycle frame;
FIG. 3 is a side plan view of the assembled cycle frame; and
FIGS. 4, 5 are block diagrams illustrating the operations for the cycle frame.

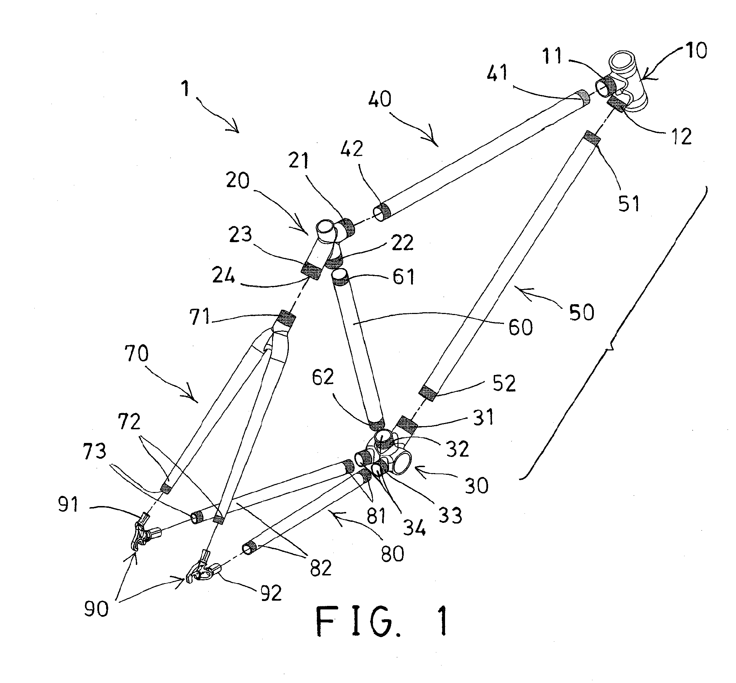

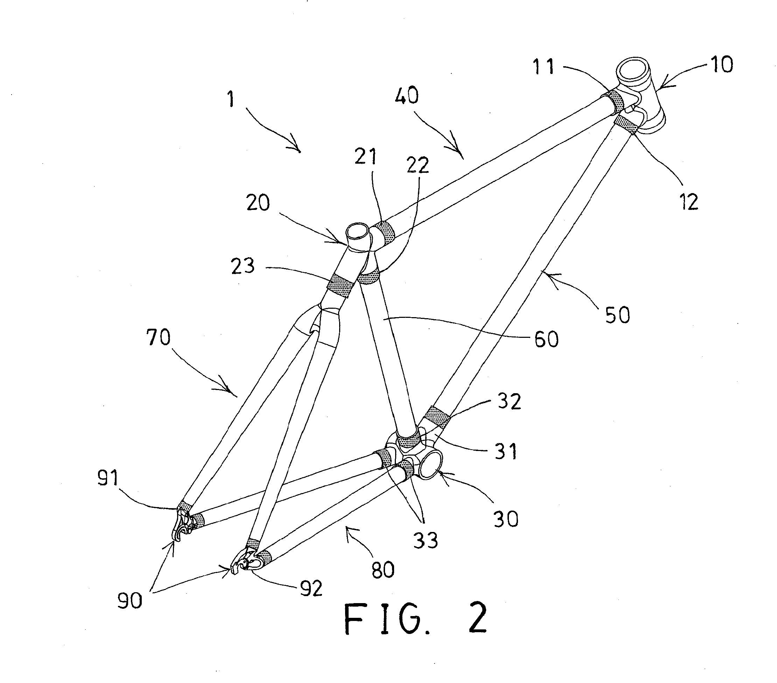

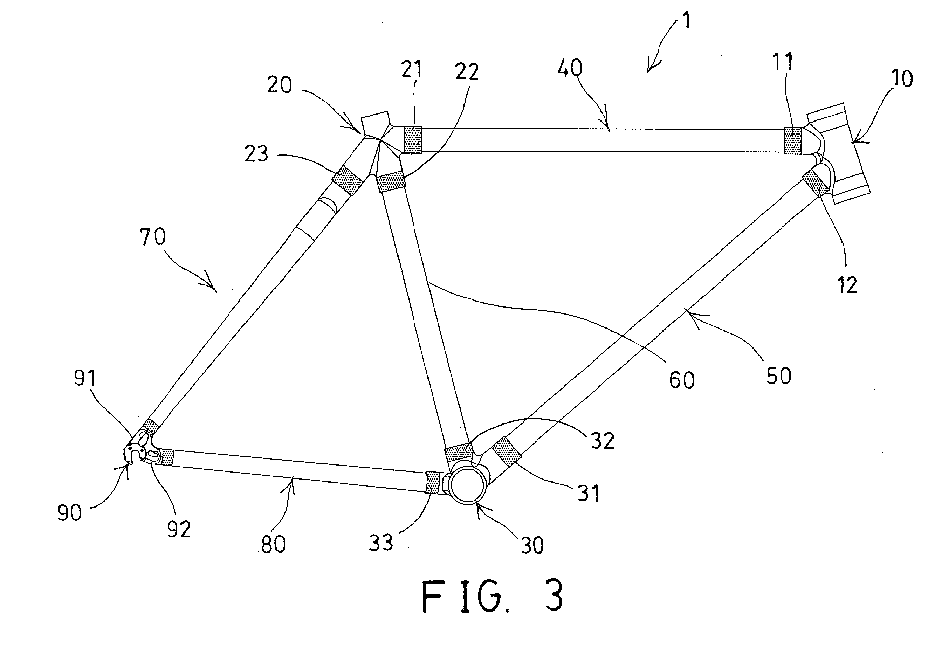

Referring to FIGS. 1-3, a method is provided for assembling the parts of a bicycle or cycle frame 1 which comprises a steering tube 10, a saddle fitting 20, a crank-gear fitting 30, an upper tube 40, a down tube 50, a seat or saddle tube 60, a bracing rear fork or seat stay 70, a horizontal rear fork or chain stay 80, and one or more rear axle drop-out members 90 to be assembled together by heating or cooling processes. The female members 10-30, such as the steering tube 10 and the saddle fitting 20 and the crank-gear fitting 30 each include one or more barrels or female fitting elements 11, 12; 21, 22, 23; 31, 32, 33 each having a bore 14, 24, 34 for engaging with the end portions or the male fitting elements 41, 42; 51, 52; 61, 62; 71, 72; 81, 82 of the male members 40-80, in which the male members 40-80 include the upper tube 40, the down tube 50, the saddle tube 60, the seat stay 70, and the chain stay 80. The parts or members 10-90 are made of aluminum or metal materials that may be enlarged or expanded by heating and that may be reduced or shrunk or contracted by a cold temperature or freezing.

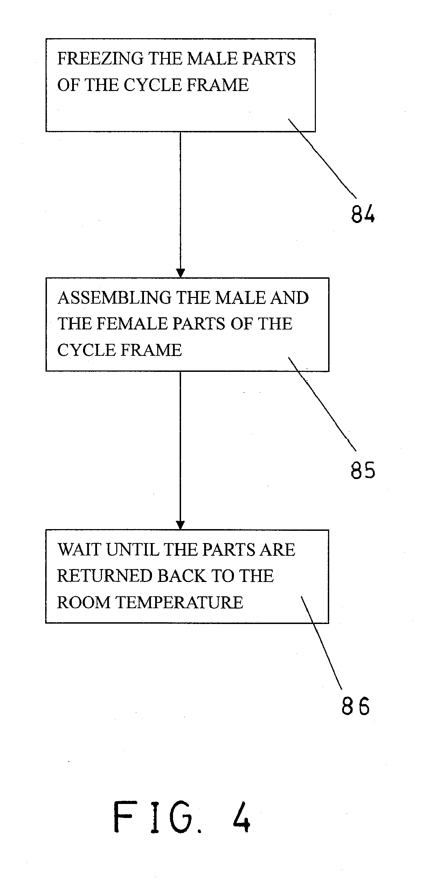

In assembling, the male fitting elements 41, 42; 51, 52; 61, 62; 71, 72; 81, 82 of the male members 40-80 may be cooled or frozen in the process 84 (FIG. 4) to a temperature below zero, by immersing the male members 40-80 in the liquid nitrogen, for shrinking or contracting the male members 40-80, for allowing the shrunk or contracted male fitting elements 41, 42; 51, 52; 61, 62; 71, 72; 81, 82 of the male members 40-80 to be engaged into the bores 14, 24, 34 of the female fitting elements 11, 12; 21, 22, 23; 31, 32, 33 of the female members 10-30 in the process 85 and to be secured to the female members 10-30 after the frozen male members 40-80 are expanded or returned back to the normal or the room temperature in the process 86.

Similarly, the male fitting elements 91, 92 of the rear axle drop-out members 90 may be cooled or frozen in the process 84 to the temperature below zero, by immersing the male members 90 in the liquid nigrogen, for shrinking or contracting the male members 90 for allowing the shrunk or contracted male fitting elements 91, 92 of the male members 90 to be engaged into the bores 73 of the female fitting elements 72, 82 of the female members 70, 80 in the process 85 and to be secured to the female members 70, 80 after the frozen male members 90 are returned back to the normal or the room temperature in the process 86.

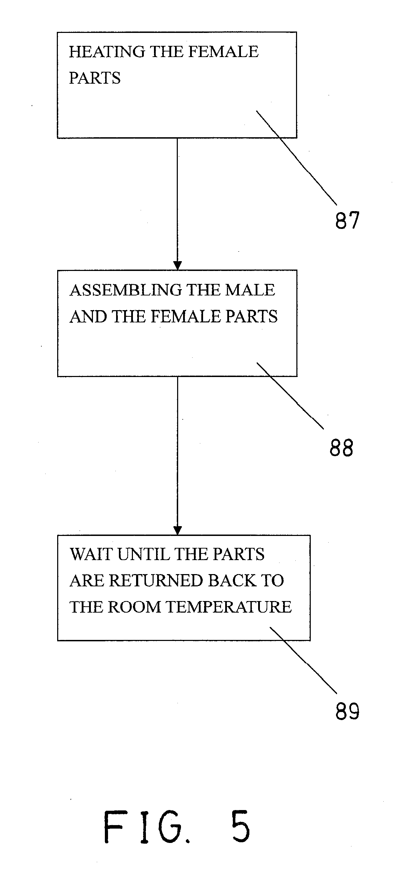

Alternatively, as shown in FIG. 5, the female members 10-30 may be heated in the process 87 to the greater or hotter temperature with a high frequency furnace (not shown) in order to expand the female fitting elements 11, 12; 21, 22, 23; 31, 32, 33 of the female members 10-30, which may then be engaged into the bores 14, 24, 34 of the heated female fitting elements 11, 12; 21, 22, 23; 31, 32, 33 of the female members 10-30 in the process 88 and to be secured to the female members 10-30 after the heated female members 10-30 are returned back to the normal or the room temperature in the process 89.

Similarly, the female fitting elements 72, 82 of the female members 70, 80 may also be heated and expanded in the process 87, for allowing the male fitting elements 91, 92 of the rear axle drop-out members or male members 90 to be engaged into the bores 73 of the heated female fitting elements 72, 82 in the process 88 and to be secured to the female members 70, 80 after the heated female members 70, 80 are shrunk or returned back to the normal in the process 89, such that the parts 10-90 of the cycle frame 1 may be quickly assembled together by changing the temperature between the female members 10-30; or 70, 80 and the male members 40-80; or 90 without latches, fasteners, or welding seams.

Alternatively, the fitting elements 41, 42; 51, 52; 61, 62; 71, 72; 81, 82 of the members 40-80 may act as the female fitting elements of the female members for engaging with the male fitting elements 11, 12; 21, 22, 23; 31, 32, 33 of the male members 10 to 30.

## Claims

1. A method for assembling a cycle frame, the cycle frame including a plurality of male members each having at least one male fitting element, and including a plurality of female members each having at least one female fitting element, the method comprising:
changing a temperature between the male fitting element and the female fitting element for allowing the male fitting element to be engaged into the female fitting element.

2. A method as claimed in claim 1, wherein male members are frozen to contract the male fitting element before the male fitting element is engaged into the female fitting element.

3. A method as claimed in claim 2, wherein male members are frozen by immersing the male members in a liquid nitrogen.

4. A method as claimed in claim 1, wherein female members are heated to expand the female fitting element before the male fitting element is engaged into the female fitting element.

5. A method as claimed in claim 4, wherein female members are heated in a high frequency furnace.

6. A method as claimed in one of claims 1 to 5, wherein the male members are selected from an upper tube, a down tube, a saddle tube, a seat stay, and a chain stay, and the female members are selected from a steering tube, a saddle fitting and a crank-gear fitting.

7. A method as claimed in one of claims 1 to 6, wherein the male members are selected from a rear axle drop-out member, and the female members are selected from a seat stay and a chain stay.
